Europäisches Patentamt

European Patent Office

Office européen des brevets

(11) Veröffentlichungsnummer : **0 369 122 B1**

(12) # EUROPÄISCHE PATENTSCHRIFT

(45) Veröffentlichungstag der Patentschrift :
**17.06.92 Patentblatt 92/25**

(51) Int. Cl.$^5$ : **C01F 7/30**, C01F 7/02

(21) Anmeldenummer : **89116280.2**

(22) Anmeldetag : **04.09.89**

(54) **Amorphes Aluminiumoxid, Verfahren zu seiner Herstellung und Verwendung.**

(30) Priorität : **15.11.88 DE 3838675**

(43) Veröffentlichungstag der Anmeldung :
**23.05.90 Patentblatt 90/21**

(45) Bekanntmachung des Hinweises auf die
Patenterteilung :
**17.06.92 Patentblatt 92/25**

(84) Benannte Vertragsstaaten :
**BE DE FR GB IT NL**

(56) Entgegenhaltungen :
**DD-A- 250 521**
**DE-C- 953 254**
**GB-A- 1 432 107**
**GB-A- 2 190 666**

(56) Entgegenhaltungen :
**CHEMICAL ABSTRACTS Band 95, Nr.20,**
**16.Nov. 1981, S.743, Spalte 2, Zusammenfas-**
**sung Nr.180074v, Columbus, Ohio, USA; Y.**
**SHOJIet al.:" Reaction between aluminium**
**chloride and steam in the vapor phase and**
**property of the aluminium oxide formed" &**
**Bull.Chem. Soc. Jpn.1981, Bnd.54, Nr. 9, Seiten**
**2652-2655**

(73) Patentinhaber : **Degussa Aktiengesellschaft**
**Weissfrauenstrasse 9**
**W-6000 Frankfurt am Main 1 (DE)**

(72) Erfinder : **Pauli, Ingo, Dr.**
**Friedberger Gässchen 2**
**W-8755 Alzenau (DE)**
Erfinder : **Kleinschmit, Peter, Dr.**
**Wildaustrasse 19**
**W-6450 Hanau 9 (DE)**
Erfinder : **Schwarz, Rudolf, Dr.**
**Taunusstrasse 2**
**W-8755 Alzenau-Wasserlos (DE)**

**Beschreibung**

Die Erfindung betrifft ein röntgen-amorphes Aluminiumoxid, das Verfahren zu seiner Herstellung und Verwendung.

Es ist bekannt, röntgen-amorphes Aluminiumoxid heizustellen, indem man Aluminiumhydroxid bei einer Temperatur von 400 bis 475 °Kelvin mit einem Gas transportiert und bei 725 bis 825 °Kelvin an einem Wärmeaustauscher behandelt. Das erhaltene Produkt kann bei einer Temperatur von 1275 °Kelvin in $\alpha$-Aluminiumoxid umgewandelt werden (DD-PS 25 05 21).

Das bekannte Verfahren hat den Nachteil, daß man zur Entfernung der großen Wassermengen große Energie aufwenden muß. Weiterhin ist es schwierig, eine rein amorphe Substanz zu erhalten, die wiederum die Voraussetzung für ein reines $\alpha$-Aluminiumoxid ist.

Gegenstand der Erfindung ist ein röntgen-amorphes, extrem wasserhaltiges Aluminiumoxid, welches eine spezifische Oberfläche (BET) nach DIN 66 131 von > 10 $m^2$/g, eine mittlere Teilchengröße von von 1 µm, wobei die Tülchengrößen zwischen 0.1 und 10 µm liegen, und einen Wassergehalt von > 10 % aufweist.

Dieses röntgen-amorphe Aluminiumoxid kann vorteilhafterweise als Katalysatorträger und als feuerhemmender Füllstoff eingesetzt werden.

Ein weiterer Gegenstand der Erfindung ist ein Verfahren zu Herstellung des röntgen-amorphen, extrem wasserhaltigen Aluminiumoxides, welches eine spezifische Oberfläche (BET) nach DIN 66 131 von > 10 $m^2$/g, eine mittlere Teilchengröße von von 1 µm, wobei die Tülchengrößen zwischen 0.1 und 10 µm liegen, und einen Wassergehalt von > 10 % aufweist, nach Anspruch 1, welches dadurch gekennzeichnet ist, daß man Wasserdampf und dampfförmiges Aluminiumtrichlorid in einem Mol-Verhältnis von 1,5 bis 10 : 1 vorzugsweise von 7 ± 1 : 1 = $H_2O$ : $AlCl_3$ bei einer Temperatur von 600 ± 50 °C und bei einer Verweilzeit von 3,5 ± 1 sec und einem Unterdrücke von 100 ± 10 mm $H_2O$ Säule (= 10 ± 1 mbar) im Vergleich zum Narmaldruck umsetzt.

Ein weiterer Gegenstand der Erfindung ist ein Aluminiumoxid, welches zu $\geqq$ 90 Gew.-% aus $\alpha$-Aluminiumoxid besteht, eine spezifische Oberfläche (BET) nach DIN 66 131 von > 5 $m^2$/g, vorzugsweise 10 bis 20 $m^2$/g, und eine mittlere Teilchengröße von 9,53 µm aufweist, wobei di Teilchengrößen zwischen 1 und 30 µm liegen.

Dieses Aluminiumoxid kann vorteilhafterweise als Poliermittel und als Hochtemperaturwärmedämmung eingesetzt werden.

Ein weiterer Gegenstand der Erfindung ist ein Verfaren zur Herstellung des Aluminiumoxides, das zu $\geqq$ 90 Gew.-% aus $\alpha$-Aluminiumoxid besteht, eine spezifische Oberfläche (BET) nach DIN 66 131 von > 5 $m^2$/g und eine mittlere Teilchengröße von 9,53 µm, aufweist wobei die Teilchengrößen zwischen 1 und 30 µm liegen, welches dadurch gekennzeichnet ist, daß man das röntgen-amorphe Aluminiumoxid !ach Anspruch 1 bei einer Temperatur von 1200 bis 1350 °C calciniert.

In einer Ausführungsform der Erfindung kann man die Calcination ohne direkte Isolierung des röntgen-amorphen Aluminiumoxides direkt im Anschluß an die Synthese durchführen.

Beispiel 1

Aluminiumtrichlorid und Wasser werden verdampft. Beide Gase werden über getrennte Leitungen im Mol-Verhältnis $H_2O$ : $AlCl_3$ = 5 : 1 gleichzeitig und kontinuierlich in einen Röhrenreaktor eingeleitet.

Der Röhrenreaktor wird durch eine externe Heizung auf eine Temperatur von 600 °C aufgeheizt.

Die Verweilzeit der beiden Gase in dem Reaktor beträgt 8 sec, wobei in dem Reaktor ein Unterdruck von 100 mm Wassersäule (= 10 mbar) eingehalten wird. Das Produkt wird mittels eines Teflon-Filters aufgefangen.

Das erhaltene Aluminiumoxid ist röntgen-amorph und weist eine mittlere Teilchengröße von 1 µm auf, wobei die Teilchengrößen zwischen 0,1 und 10 µm liegen.

Die spezifische Oberfläche (BET) nach DIN 66 131 beträgt 11 $m^2$/g.

Der Glühverlust beträgt 6,4 Gew.-% $H_2O$.

Beispiel 2

Das röntgen-amorphe Aluminiumoxid gemäß Beispiel 1 wird bei 1350 °C währen 1 Minute calciniert.

Das erhaltene Produkt besteht zu $\geqq$ 90 Gew.-% aus $\alpha$-$Al_2O_3$. Die spezifische Oberfläche (BET) nach DIN 66 131 beträgt 11 $m^2$/g.

Die mittlere Teilchengröße beträgt 9,53 µm, wobei die Teilchengrößen zwischen 1 und 30 µm liegen.

Die spezifische Oberfläche (BET) wird nach DIN 66 131 unter Verwendung von Stickstoff (Alrameter) für alle angegebenen Substanzen durchgeführt.

Die Teilchengrößenbestimmung wird nach REM-Photos oder nach der Cilas-Methode durchgeführt.

Der Glühverlust wird bei 1300 °C 3 Stunden bestimmt.

**Patentansprüche**

1. Röntgen-amorphes, extrem wasserhaltiges Aluminiumoxid, welches eine spezifische Oberfläche (BET) nach DIN 66 131 von > 10 m$^2$/g, eine mittlere Teilchengröße von 1 µm, wobei die Teilchengrößen zwischen 0,1 und 10 µm liegen, und einen Wassergehalt von > 10 % aufweist.

2. Verfahren zur Herstellung des röntgen-amorphen, extrem wasserhaltigen Aluminiumoxides, welches eine spezifische Oberfläche (BET) nach DIN 66 131 von > 10 m$^2$/g, eine mittlere Teilchengröße von 1 µm, wobei die Teilchengrößen zwischen 0,1 und 10 µm liegen, und einen Wassergehalt von > 10 % aufweist, nach Anspruch 1,
**dadurch gekennzeichnet,**
daß man Wasserdampf und dampfförmiges Aluminiumtrichlorid in einem Molverhältnis von 1,5 bis 10 : 1, vorzugweise 7 ± 1 : 1 = H$_2$O : AlCl$_3$ bei einer Temperatur von 600 ± 50 °C und bei einer Verweilzeit von 7 ± 1 sec und einem Unterdruck von 100 ± 10 mm H$_2$O-Säule (= 10 ± 1 mbar) im Vergleich zum Normaldruck umsetzt.

3. Aluminiumoxid, welches zu ≧ 90 Gew.-% aus α-Aluminiumoxid besteht, eine spezifische Oberfläche (BET) nach DIN 66 131 von > 5 m$^2$/g und eine mittlere Teilchengröße von 9,53 µm aufweist, wobei die Teilchengrößen zwischen 1 und 30 µm liegen.

4. Verfahren zur Herstellung des Aluminiumoxides nach Anspruch 3, dadurch gekennzeichnet, daß man das röntgen-amorphe Aluminiumoxid nach Anspruch 1 bei einer Temperatur von 1200 bis 1350 °C calciniert.

5. Verwendung des röntgen-amorphen Aluminiumoxides gemäß Anspruch 1 als Katalysatorträger.

6. Verwendung des röntgen-amorphen Aluminiumoxides gemäß Anspruch 1 als feuerhemmmender Füllstoff.

7. Verwendung des Aluminiumoxides gemäß Anspruch 3 als Poliermittel.

8. Verwendung des Aluminiumoxides gemäß Anspruch 3 als Hochtemperaturwärmedämmung.

**Claims**

1. An X-ray-amorphous aluminium oxide of high water content which has a specific surface (BET) according to DIN 66 131 of >10 m$^2$/g, an average particle size of 1 µm, the particle sizes being between 0.1 and 10 µm, and a water content of >10%.

2. A process for the production of the X-ray-amorphous aluminium oxide of high water content which has a specific surface (BET) according to DIN 66 131 of >10 m$^2$/g, an average particle size of 1 µm, the particle sizes being between 0.1 and 10 µm, and a water content of >10% claimed in claim 1,
characterized in that
steam and vaporous aluminium trichloride in a molar ratio of 1.5 to 10 : I and preferably 7 ± 1 : 1 = H$_2$O : AlCl$_3$ are reacted for 7 ± 1 seconds at a temperature of 600 ± 50°C and under a reduced pressure of 100 ± 10 mm water column (= 10 ± mbar) in relation to normal pressure.

3. Aluminium oxide of which ≥ 90% by weight consists of a-aluminium oxide and has a specific surface (BET) according to DIN 66 131 of > 5 m$^2$/g and an average particle size of 9.53 µm, the particle sizes being between 1 and 30 µm.

4. A process for the production of the aluminium oxide claimed in claim 3, characterized in that the X-ray amorphous aluminium oxide claimed in claim 1 is calcined at a temperature of 1,200 to 1,350°C.

5. The use of the X-ray amorphous aluminium oxide claimed in claim 1 as a catalyst support.

6. The use of the X-ray amorphous aluminium oxide claimed in claim 1 as a fire-retardant filler.

7. The use of the aluminium oxide claimed in claim 3 as a polish.

8. The use of the aluminium oxide claimed in claim 3 as high-temperature heat insulation.

**Revendications**

1. Oxyde d'aluminium amorphe aux rayons X, à extrêmement forte teneur en eau, qui présente une surface spécifique (BET) > 10 m$^2$/g selon DIN 66 131, une taille mienne de particules de 1 µm, les tailles de particules étant comprises entre 0,1 et 10 µm, et une teneur en eau > 10 %.

2. Procédé pour la préparation de l'oxyde d'aluminium amorphe aux rayons X, à extrêmement forte teneur en eau, qui présente une surface spécifique (BET) > 10 m$^2$/g selon DIN 66131, une taille moyenne de particules de 1 µm, les tailles moyennes de particules étant comprises entre 0,1 et 10 µm, et une teneur 'en eau > 10 %, selon la revendication 1,
caractérisé en ce que

l'on fait réagir de la vapeur d'eau et du trichlorure d'aluminium sous forme de vapeur, en un rapport molaire allant de 1,5 à 10 : 1, de préférence de 7 ± 1 = 1 : $H_2O$ : $AlCl_3$, à une température de 600 ± 50°C et pendant un temps de séjour de 3,5 ± 1 seconde et sous une dépression de 100 ± 10 mm à la colonne d'eau (= 10 ± 1 mbars) par rapport à la pression normale.

3. Oxyde d'aluminium qui consiste à raison de ≥ 90 % en poids en oxyde d'aluminium α, présente une surface spécifique (BET) > 5 $m^2$/g selon DIN 66131 et une taille moyenne de particules de 9,53 μm, les tailles de particules étant comprises entre 1 et 30 μm.

4. Procédé pour la préparation de l'oxyde d'aluminium selon la revendication 3, caractérisé en ce que l'on calcine à une température de 1200-1350°C l'oxyde d'aluminium amorphe aux rayons X selon la revendication 1.

5. Utilisation de l'oxyde d'aluminium, amorphe aux rayons X, selon la revendication 1, en tant que support de catalyseur.

6. Utilisation de l'oxyde d'aluminium, amorphe aux rayons X, selon la revendication 1, en tant que charge coupe-feu.

7. Utilisation de l'oxyde d'aluminium, selon la revendication 3, en tant qu'agent de polissage.

8. Utilisation de l'oxyde d'aluminium selon la revendication 3, en tant qu'isolant thermique à haute température.